# EUROPEAN PATENT SPECIFICATION

(11) **EP 3 486 348 B1**
(45) Date of publication and mention of the grant of the patent: **26.05.2021**
(21) Application number: 17827050.0
(22) Date of filing: 05.07.2017
(51) Int. Cl.: C22C 19/03, H01F 41/26, H01M 4/90, H01M 4/96, B82Y 40/00, B22F 9/24

(54) **METHOD FOR OBTAINING A NANOCOMPOSITE MATERIAL BY MEANS OF CYCLES OF GALVANOSTATIC CHARGE AND DISCHARGE UNDER THE ACTION OF MAGNETIC FIELDS AND MATERIAL THUS OBTAINED**
VERFAHREN ZUR HERSTELLUNG EINES NANOKOMPOSITMATERIALS MITTELS ZYKLEN EINER GALVANOSTATISCHEN LADUNG UND ENTLADUNG UNTER EINWIRKUNG VON MAGNETFELDERN UND AUF DIESE WEISE HERGESTELLTES MATERIAL
PROCÉDÉ D'OBTENTION D'UN MATÉRIAU NANOCOMPOSÉ AU MOYEN DE CYCLES DE CHARGES ET DE DÉCHARGES GALVANOSTATIQUES SOUS L'ACTION DE CHAMPS MAGNÉTIQUES, ET MATÉRIAU AINSI OBTENU

(30) Priority: 13.07.2016 ES 201600602
(43) Date of publication of application: 22.05.2019
(73) Proprietor: Universitat de València, 46010 Valencia (ES)
(72) Inventor: CORONADO MIRALLES, Eugenio, 46980Paterna (Valencia) (ES); PRIMA GARCÍA, Helena, 46980 Paterna (Valencia) (ES); ABELLÁN SÁEZ, Gonzalo, 46980 Paterna (Valencia) (ES); ROMERO PASCUAL, Jorge, 46980 Paterna (Valencia) (ES)
(74) Representative: Cueto, Sénida
(86) International application number: PCT/ES2017/070487
(87) International publication number: WO 2018/011445

(56) References cited:
- EP-A1- 2 818 570
- EP-A1- 2 818 570
- XU M H ET AL: "Highly stable FeNi alloy nanoparticles encapsulated in carbon nanotubes: Synthesis, structure and magnetic properties", JOURNAL OF ALLOYS AND COMPOUNDS, ELSEVIER SEQUOIA, LAUSANNE, CH, vol. 495, no. 1, 9 April 2010 (2010-04-09) , pages 200-204, XP026977737, ISSN: 0925-8388 [retrieved on 2010-02-02]
- GONZALO ABELL?N ET AL: "Layered double hydroxide (LDH)-organic hybrids as precursors for low-temperature chemical synthesis of carbon nanoforms", CHEMICAL SCIENCE, vol. 3, no. 5, 1 January 2012 (2012-01-01) , page 1481, XP055082025, ISSN: 2041-6520, DOI: 10.1039/c2sc01064j
- ABELLAN, G. ET AL.: 'GRAPHENE ENHANCES THE MAGNETORESISTANCE OF FENI3 NANOPARTICLES IN HIERARCHICAL FENI3-GRAPHENE NANOCOMPOSITES' JOURNAL OF MATERIALS C vol. 4, 21 March 2016, pages 2252 - 2258, XP055456333
- ABELLAN, G. ET AL.: 'A CHEMICAL AND ELECTROCHEMICAL MULTIVALENT MEMORY MADE FROM FENI3-GRAPHENE NANOCOMPOSITES' ELECTROCHEMISTRY COMMUNICATIONS vol. 39, 07 December 2013, pages 15 - 18, XP028671792

## Description

### INTRODUCTION

The rapid increase in energy demand in recent years has accelerated the search for low cost alternatives for energy storage and conversion. Two-dimensional materials such as graphene or DLH (double layered hydroxides) are fundamental components for the design of advanced nanomaterials since they have unique properties of electrochemical activity and energy conversion. These materials allow the development of applications that benefit from the two-dimensional nature of these systems, providing flexibility, numerous redox processes of interest and good electrical conductivity. These are aspects of utmost importance for the development of batteries with efficient anodes and cathodes, supercapacitors with high density of energy or fuel cells. Among others, supercapacitors are an important type of device for the storage of energy. They allow high density storage of energy in short periods of time with the capacity to repeat many charge-discharge cycles without losing efficiency.

The present invention addresses a new material and a method of manufacturing thereof comprising the step of applying a series of galvanostatic charges and discharges to a nanocomposite (NC) material of graphitized carbon matrix with FeNi₃ nanoparticles in the presence of an external magnetic field. This will produce a much more active material from the supercapacitive point of view, therefore capable of improving the efficiency of supercapacitors manufactured with said material. By applying an external magnetic field to the precursor nanocomposite material, a layer of nickel oxide (Ni²⁺) is generated, more efficient from the electrochemical point of view than if it was obtained in the absence of the magnetic field. Surprisingly, this material is capable of increasing its capacitance almost 600% higher than the material in the absence of a magnetic field, and there is no reference in the bibliography of such increase.

### Background of the technique

WO 2013/177543 A1 discloses that the application of a magnetic field to certain dielectric materials can lead to a large increase in the dielectric constant of the material, and therefore in the capacitance of the supercapacitor constructed therewith.

In this document a variable magnetic field is used, thus increasing the difficulty of implementation and the cost of the invention, unlike the present invention, which can use both electromagnets and static commercial magnets.

US20100302703 discloses a thin film capacitor intended to be implemented in circuits. As in the previous case, it is reported that, by applying magnetic fields, it is possible to increase the dielectric constant of dielectric materials up to a factor of 10x.

In Guo et al., NanoEnergy 2014, 6, 180 and in Guo et al., Energy Environmental Science 2013, 6, 194, the authors demonstrate a relatively modest (less than 200%) increase in capacity by applying magnetic fields to nanocomposites materials based on Fe₂O₃ and graphene. In addition, they present a very poor cyclability, after less than 1000 cycles capacity decreases.

Lu et al., RSC Advances 2015, 5, 99745-99753 discloses the influence of magnetic fields on the morphology and pseudo-capacitive properties of nanostructured nickel oxide. It was found that the magnetic field affected the size and growth direction of the NiO nanoplates, as well as the electrochemical performance of the NiO nanomaterial. In other words, this document shows that when applying magnetic fields, the compaction and NiO growth on Ni foam is better. On the other hand, in the case of the present invention, there is no growth reaction of the NiO nanoplates, instead, there is Ni oxidation to form Ni(OH)₂.

However, all these documents have a common aspect: The observed increases in capacitance are due to other phenomena different to the generation of electrochemically active chemical compounds; on the contrary, they are due to other phenomena such as magneto-resistance effects or similar. In contrast, in the case of the present invention the observed increases in capacitance are due, as will be explained in detail below, to a substantial increase in the nickel oxide layer (which is electrochemically active) generated, in comparison with which it is generated in the absence of the magnetic field. That is, the chemical reaction has been favored by applying a magnetic field, thus, generating much more nickel oxide than that would be obtained in the absence of a magnetic field. To the inventor's knowledge, this phenomenon has not been described to date. This electrochemically very active material shows capacitance increases much higher than those obtained without the application of the magnetic field. These capacitance increases are also permanent and are still observed even in the absence of a magnetic field after its generation. Therefore, this demonstrates that this phenomenon is not transient and that a new material has been generated. This material has been characterized by the following techniques: HRTEM, SEM, Raman, XPS, electronic conductivity and magnetism, and from all of them it is inferred that in the new material a much larger oxide layer has been generated.

Furthermore, in the prior art documents cited above, galvanostatic cycles are applied as part of the characterization method of the studied nanocomposites. Therefore, said galvanostatic cycles are in no case used as methods of obtaining nanocomposite because the prior art materials are typically obtained by the usual autoclave hydrothermal process.

### SUMMARY OF THE INVENTION

Therefore, the problem to be solved in the present invention is to provide a method of obtaining a new material with much better magnetic properties than the materials known to date, which after the application of a magnetic field, this new material, exhibits increases of capacitance up to 600% compared to the absence of a magnetic field.

The inventors have identified a solution of this problem based on the fact that by applying a magnetic field of intensity between 5 mT and 600mT (50 G and 6000 G), preferably betweer 100 mT and 600 mT (1000 G and 6000 G), more preferably between 200 mT and 600 mT (2000 G and 6000 G), most preferably around 400 mT (4000 G), to a graphitized carbon matrix with FeNi₃ nanoparticles a resulting material is obtained which is capable of exhibiting a capacitance increase up to 600% higher than is the one obtained in the absence of a magnetic field.

Accordingly, a first aspect of the invention addresses a method of obtaining a nanocomposite material comprising the following steps:
a) Providing a nanocomposite precursor material comprising a carbon matrix graphitized with FeNi₃ nanoparticles, and
b) Subjecting said material to a number between 100 and 10,000 galvanostatic charge/discharge cycles at a current density between 30 and 1 Ag⁻¹ either for charge or discharge,simultaneously applying a magnetic field of an intensity between 5 mT and 600 mT (50 G and 6000 G) is applied.

In preferred embodiments of the invention, the number of galvanostatic cycles to which the material is subjected will preferably be between 100 and 5,000, more preferably between 500 and 1,500, and most preferably between 700 and 1,000, since from this value, capacitance does not significantly increase, an n this way manufacturing costs are controlled.

In a second aspect, the invention refers to the nanocomposite material obtained by said process, as well as to electrodes for batteries or supercapacitors comprising said material.

In a third aspect, the invention refers to the use of said nanocomposite material in electrodes for batteries or supercapacitors.

Obtaining the nanocomposite material of the invention is also quite economical, because the precursor, before calcining it to obtain the graphitized matrix, is obtained at low temperatures (80 °C) and the optimum magnetic field is a low intensity one (400 mT (4000 G), equivalent to the field produced by a neodymium hand magnet). On the other hand, the present invention shows how the performance of a supercapacitive device can improve by using an external magnetic field.

### BRIEF DESCRIPTION OF THE FIGURES

Figure 1: Diagram of the homemade electrochemical cell used in the described experiments and electromagnet that applies a magnetic field to it. The components are (A) reference electrode; (B) working electrode; (C) auxiliary electrode; (D) electrolyte; (E) electromagnet.
Figure 2: Capacitive retention of the NC after 50 galvanostatic cycles in the absence of a magnetic field and applying different types of magnetic fields.
Figure 3: Capacitive retention of the NC and its components separately after 300 galvanostatic cycles with and in the absence of a magnetic field.
Figure 4: Capacitive retention of the NC after 1000 galvanostatic cycles with and without magnetic field.
Figure 5: Galvanostatic discharge curves of the NC with magnetic field. (A) Curve of cycle 1; (B) Curve of cycle 250; (C) Curve of cycle 500; (D) Curve of cycle 750; (E) Curve of cycle 1000.
Figure 6: FESEM image of the NC after 1000 galvanostatic cycles with a magnetic field.
Figure 7: HRTEM images of the NC after 1000 galvanostatic cycles with a magnetic field.
Figure 8: Raman spectrum of the NC obtained with 1000 galvanostatic cycles applying a magnetic field.
Figure 9: Raman spectrum of the NC precursor and the NC after 1000 galvanostatic cycles with a magnetic field.
Figure 10: XPS spectrum of the NC oxygen after 1000 galvanostatic cycles with and without a magnetic field.
Figure 11: Hysteresis cycle at low temperature, 2 K. In this figure, the curve with alternating dot-dash lines corresponds to the starting precursor sample. The sample with dashed lines represents the magnetism of the precursor sample after applying 1000 galvanostatic cycles in the absence of a magnetic field. The curve with dotted lines represents the precursor sample with a magnetic field.
Figure 12: Current curves of the source sample (left) and the sample (right) after applying 1000 cycles and a magnetic field.
Figure 13: Stability test of the NC obtained with 1000 galvanostatic cycles with a 400 mT (4000 G) continuous magnetic field, carried out at a current density of 20 Ag⁻¹.

### DEFINITIONS

In the present invention, by "nanoparticles" is meant, particles less than 100 nanometers in size.

By "graphitized carbon matrix" is meant a carbon-rich material which initial structure has been totally derived to a graphite structure. This graphitic structure is an allotropic carbon form in which the carbon atoms have sp² hybridization, what means that It forms three covalent bonds in the same plane at an angle of 120° (hexagonal structure) and an orbital π perpendicular to that plane remains free. These delocalized π orbitals are the ones that confer electrical properties to graphite.

By "nanocomposite material" or "nanocomposite" is meant, in the present invention, a multiphase solid material having a voluminous matrix and one or more nanodimensional phases (less than 100 nanometers) with different chemical and/or structural properties.

### DETAILED DESCRIPTION OF THE INVENTION.

So far, all efforts to improve energy density and power in supercapacitive devices have been dedicated to modify the internal configuration of the capacitor. This includes new approaches to improve electrodes materials, new configurations of the capacitors, or tailor-made porous structures. During our investigations with these magnetic hybrid materials, we have discovered that the application of an external magnetic field leads to a significant increase in the device performance. In fact, by applying relatively small magnetic fields (400 mT (4000 G)) we have observed an order of magnitude increase in the capacitance of a magnetic hybrid nanocomposite material in a conventional three-electrode cell (from 105 F.g⁻¹ to 1010 F.g⁻¹). The present invention is based on this magnetic approach, to build supercapacitative device prototypes such as two electrode batteries or other architectures based on these magnetic materials.

As a precursor, the nanocomposite material (NC) described in WO 2013124503 A1 and developed by the present inventors in 2013 was used, namely:
Aqueous solutions of nickel and iron salts were prepared keeping the stoichiometric coefficient x = M'" / (M" + M'") constant for x values of 0.20, 0.25 and 0.33, and with a total metal concentration constant and equal to 1 M using distilled water. A second aqueous solution of decanedioic acid and NaOH was prepared using distilled water. Both solutions were mixed dropwise, what resulted in a gel of pH = 8. Subsequently, it was heated to 80 °C under constant stirring and keeping this temperature for five days at atmospheric pressure. The solid obtained was filtered and washed with abundant water and ethanol, and finally dried under vacuum at room temperature. The entire procedure was carried out in an inert atmosphere to prevent contamination by atmospheric CO₂ in the final precursor. Additionally, the pH was kept constant to avoid formation of impurities in the final solid.

The solids obtained in the first stage were calcined in nitrogen atmosphere at different temperatures (400, 650 and 900 °C) during different time periods: 3, 6 and 9 hours in a programmable oven with a heating ramp that can be 1, 5 and 10 °C/min and a nitrogen flow of 40-120 mL/min. For all cases a powder was obtained, FeNi₃-carbon nanocomposite material, in the form of crystalline nanoparticles. In this document, the material resulting from this process is called "NC precursor".

Finally, these nanoparticles were subjected to an acid wash with 2M HCI with magnetic stirring for 2 hours, thus, Ni and Fe nanoparticles embedded in the matrix were eliminated. Thus, a graphitized and porous matrix with FeNi₃ nanoparticles was obtained.

To synthesize the NC of the invention, a suspension was made with ethanol and the NC precursor. Once the suspension was prepared, it was deposited on nickel foam (density of 6.6 mg cm⁻²) and allowed to dry at 80 °C for two hours. Once dried, the nickel foam was compressed with a 10 tons pressure.

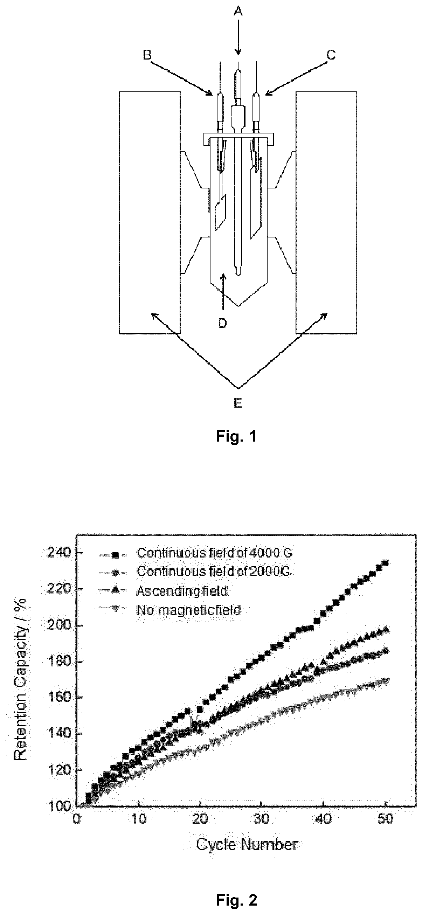

Once the electrode was prepared, a series of galvanostatic cycles were applied at a current density of 10 and 1 Ag⁻¹, with a potential window between +0.4 V and -0.3 V vs Ag/AgCI. Said galvanostatic cycles were carried out in a homemade electrochemical cell, using the material of the invention as working electrode, stainless steel as counterelectrode, and a reference electrode of Ag/AgCl_{KCL 3M}. In order to apply different external magnetic fields, the cell was interposed between the poles of an electromagnet (Figure 1). The following charge/discharge cycles were applied to said cell:
1. Constant and continuous field of 200 mT (2000 G)
2. Constant and continuous field of 400 mT (4000 G)
3. Constant and continuous field of 600 mT (6000 G)
4. Ascending field, starting with 5 mT (50 G) and increasing 5 mT (50 G) every 2 cycles.
5. No magnetic field applied.

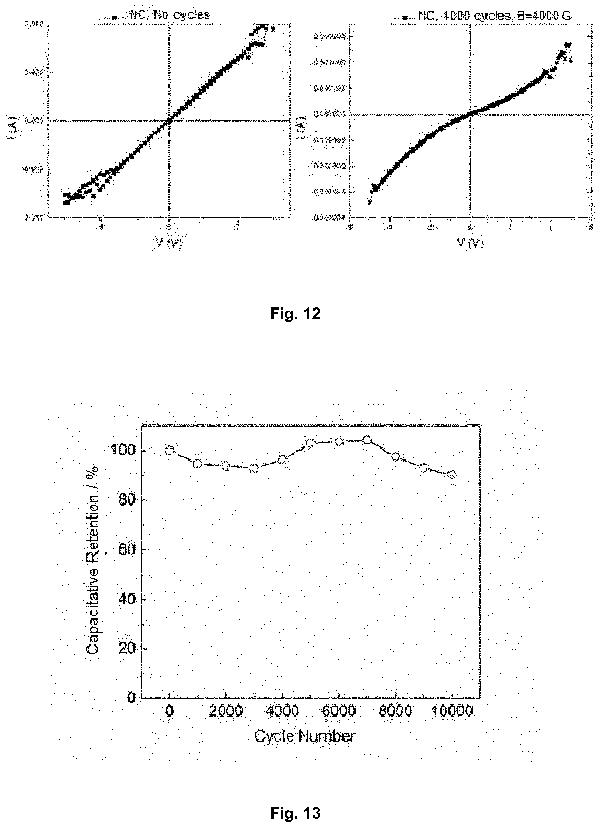

In general, tests show that the specific capacity retention increases with the number of cycles (160% without applying magnetic fields), beginning with noticeable increases after 50-100 cycles, as a consequence of the NC activation, when metal oxides and oxohydroxides (NiOOH and FeOOH) are generated. In an initial optimization process, when applying a 200 mT (2000 G) constant and continuous magnetic field, better results were obtained than without a magnetic field, increasing the difference with the number of cycles (Figure 2). However, best results were obtained with a 400 mT (4000 G) continuous magnetic field with an increase of 240% at 50 cycles, as can be seen in Figure 2. No matter the field is continuous or gradual, the application of a magnetic field causes a greater increase in the specific capacity of the material of the invention. In tests conducted with higher magnetic fields (up to 1 T (10,000, G) according to Figure 13) it was observed that the increase in capacitance was practically the same as with 400 mT (4000 G), so the value of 400 mT (4000 G) was adopted for subsequent tests as the optimum value of the magnetic field strength. Likewise, tests were also carried out at different current densities between 1 and 30 Ag⁻¹ both for charge and discharge, observing that greater increases in specific capacity were obtained with lower current densities. Thus, the optimal method is to carry out cycles at current density of 10 Ag⁻¹ for the charge and 1 Ag⁻¹ for the discharge.

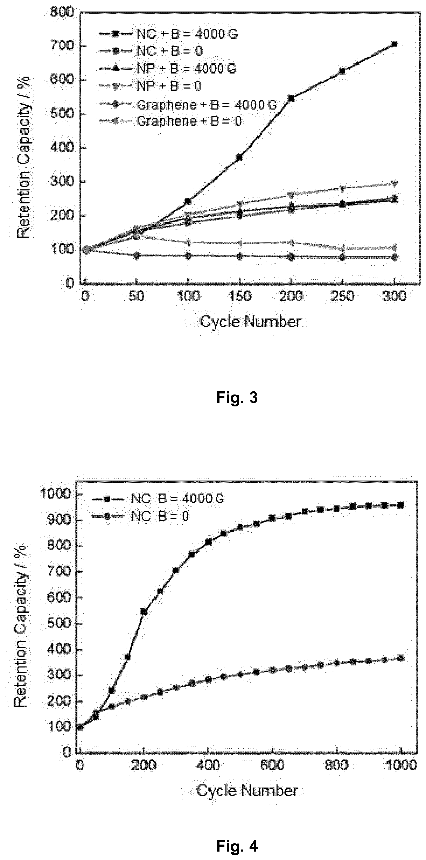

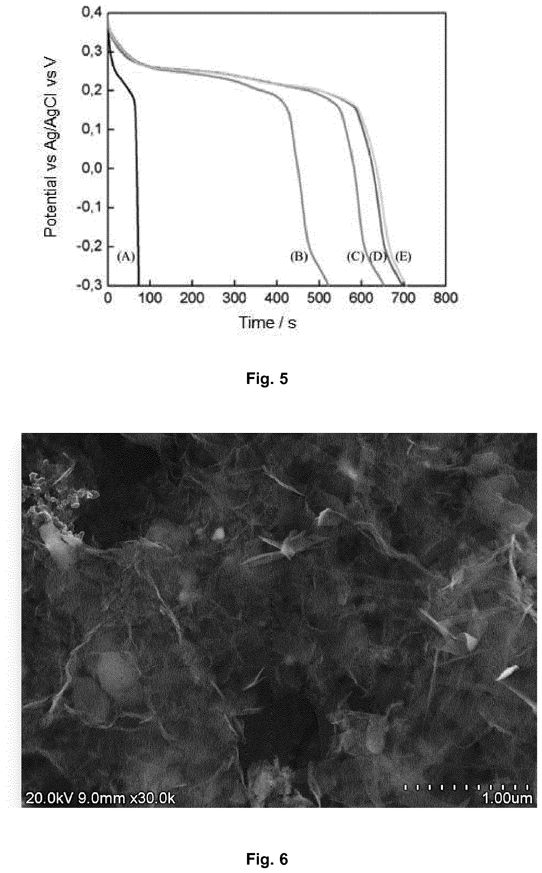

To elucidate which part of the material of the invention was affected by the presence of a magnetic field, we decided to do the same study to the two material components separately: the FeNi₃ nanoparticles (NP) and the carbon matrix. Galvanostatic cycles show a smaller increase in capacitive retention in the presence of an external magnetic field for the separate components (NPs and carbon matrix), as can be seen in Figure 3. We performed up to 1000 cycles in order to determine how much the specific capacity of our NC could increase. The capacity of our initial NC was 105.42 F g⁻¹ for a current density of 1 Ag⁻¹ and after 1000 cycles it was 1010.28 F g⁻¹ (958.27% greater). If we compare this result with the same experiment but in the absence of a magnetic field, the capacitive retention is 590% higher (Figure 4 and Figure 5).

We compare these results with those obtained by Liu *et al.* in the RSC Advances, publication cited above. Saving the differences in starting materials (NiO in Liu *et al.,* versus FeNi₃ in the present invention) and the obtaining procedure (hydrothermal with autoclaves in Liu *et al.,* application of galvanostatic cycles in the present invention), we found that, applying the maximum magnetic field strength used in said publication (12.6 mT or 126 G), and transforming the 0.4 V potential window used in Liu *et al.,* in 0.7 V in the present invention, the resulting capacitance would be 1562 F g⁻¹. It should be noticed that the measurements of Liu *et al.* are made at a current density of 0.5 Ag⁻¹ while in the present invention 1 Ag⁻¹ was used. Since the relationship between capacitance and current density is exponential, the capacitance value obtained should be more than twice the 1562 F g⁻¹ indicated. This data is a clear indication of the enormous increases in capacitance surprisingly obtained in the development of the present invention, and have no comparison with those achieved to date in the state of the art.

In order to reveal the processes behind this important increase in capacitance, a posttreatment structural analysis was performed by electronic microscopy and Raman spectroscopy after cycles application under a magnetic field, were performed to the sample. FESEM images (Figure 6) of the sample after 1000 cycles show an open and highly corrugated surface with the presence of graphene "flakes". In addition, it is possible to observe some less conductive agglomerates that suggest partial sintering of metal nanoparticles, as well as the presence of strongly oxidized surfaces.

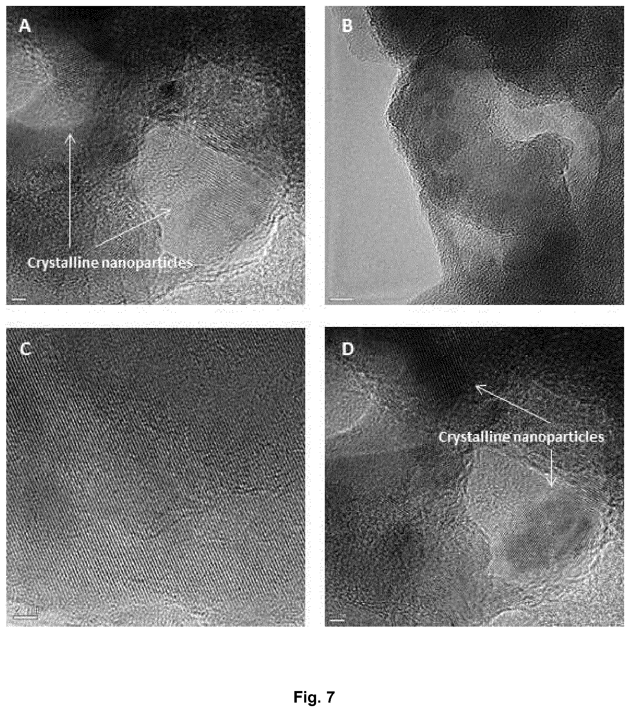

Figure 7 shows HRTEM images of the NC formed after applying the magnetic field. The selected images revealed highly crystalline multiple domain nanoparticles embedded in the carbon matrix. In addition, it can be observed that the redox reaction induced by the application of the magnetic field forms a rougher surface. It is believed that the appearance of these rough , as a consequence of the galvanostatic activation, leads to an increase in the specific surface area a greater penetration of the OH⁻ ions in the inner zone of the FeNi₃ NPs, will allow a higher oxidation, thus, forming more active species that will participate in the redox reactions.

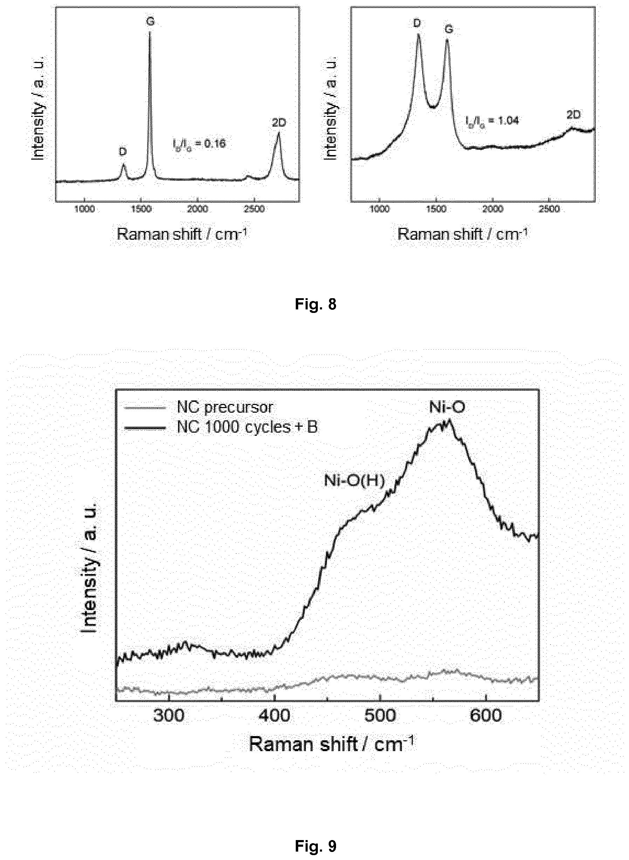

In some spectra, Raman spectroscopic analysis shows graphene characteristic bands (ie, D, G and 2D), which have a smaller proportion of I_{D}\I_{G} and a 2D sharp peak, indicative of less aggregated flakes (Figure 8). This could be related to the massive deployment of the previously formed carbon nano-onionsand/or a better separation of the graphene layers as a consequence of the electrolyte penetration.

Also, Figure 9 shows a Raman spectrum of the NC precursor and the NC obtained after 1000 galvanostatic cycles under a magnetic field. In this spectrum, it can be observed that the Raman signal of nickel oxide is negligible for the NC precursor, but it is very intense in the NC resulting from the oxidation with the galvanostatic cycles and under the magnetic field, demonstrating again the formation of Ni oxide with the proposed procedure.

In addition, the average spectra exhibit a morphology quite similar to the NC precursor, without cycles and in the absence of magnetic fields. This is indicative of the structural stability of the graphene counterpart. However, the voltammetric cycles and galvanostatic discharge curves show the opposite.

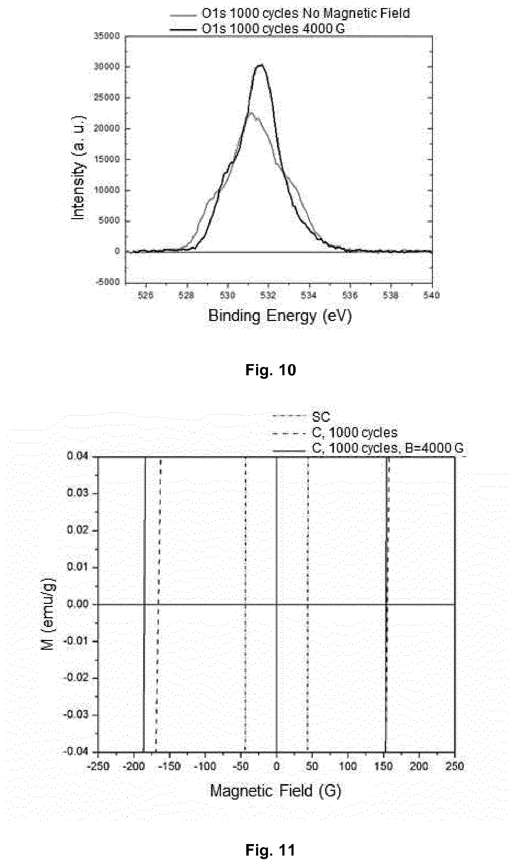

In order to corroborate that in the presence of a magnetic field we favor the reaction of oxide formation. XPS measurements were made to the NCs obtained by galvanostatic cycles with and without applying a magnetic field. As can be seen in Figure 10 for the NC obtained with magnetic field, the oxide signal increases, corroborating that the oxidation is favored in the presence of the magnetic field.

Finally, the magnetic properties of the NC precursor and the resultant NC were measured after galvanostatic cycles with, and without, a magnetic field applied. Hysteresis cycles of the different NCs show a first increase in the coercive field after galvanostatic cycles. Within these, is greater in the NC with magnetic field applied, demonstrating a greater formation of oxide. Also in the measure of the NC with magnetic field, the "exchange bias" effect appears. The presence of the "exchange bias" in the NC formed after applying a magnetic field, can come from the interaction between the antiferromagnetic spins formed in the oxidized surface and the ferromagnetic spins of the FeNi₃ nucleus. This "exchange bias" depends on the thickness of the antiferromagnetic oxide layer formed. The fact that there is an "exchange bias" only in the sample formed after applying the cycles with magnetic field is another demonstration than the magnetic field favors the formation of the oxide layer. On the other hand, conductivity measurements were also carried out. For the NC synthesized with the magnetic field, resistance increases by two orders of magnitude compared to the precursor NC (from 6.54 kOhms cm⁻¹ to 200 Ohms cm⁻¹ respectively).

Nickel oxide is not a good conductor, thus, resistance increase confirms the formation of much more nickel oxide. Another corroboration of oxide formation is the change of conductor type. NC precursor is a metallic conductor, but after performing the galvanostatic cycles with a magnetic field, it behaves like a semiconductor, as can be seen in Figure 12.

Finally, in order to see the new NC stability, 10,000 charge/discharge cycles were performed to see its degradation during these cycles. As can be seen in Figure 13, after 10,000 cycles retention is greater than 90%, what means thatonly 10% of the material is degraded after this number of charges and discharges.

In conclusion, we have synthesized a new composite material by galvanostatic cycles and an external magnetic field with much higher capacitive properties than those of the NC precursor. These results open the door to an external improvement of the specific capacitance in magnetic hybrid supercapacitors, and bring us closer to the development of new promising magnetically switchable energy storage devices.

## Claims

1. Method for obtaining a nanocomposite material comprising the following steps:
a) providing a precursor nanocomposite material comprising a graphitized carbon matrix with FeNi₃ nanoparticles, and
b) subjecting said material to a number between 100 and 10,000 galvanostatic charging/discharging cycles at a current density between 30 Ag⁻¹ and 1 Ag⁻¹ either for charge or discharge, while a magnetic field of an intensity between 5 mT and 600 mT (50 G and 6,000 G) is applied.

2. Method according to claim 1, wherein the galvanostatic cycles are carried out at a current density of 10 Ag⁻¹ for the charge and 1 Ag⁻¹ for the discharge.

3. Method according to claims 1 or 2, wherein the galvanostatic cycles are carried out in a potential window of between +0.4 V and -0.3 V vs Ag/AgCl_{KCL 3M}.

4. Method according to any one of the preceding claims, wherein the magnetic field has an intensity between 100 mT and 600 mT (1000 G and 6000 G).

5. Method according to claim 4, wherein the magnetic field has an intensity between 200 mT and 600 mT (2000 G and 6000 G).

6. Method according to claim 5, wherein the magnetic field has an intensity of 400 mT (4000 G).

7. Method according to any one of claims 1 to 6 above, wherein the number of galvanostatic cycles is between 100 and 5000.

8. Method according to claim 7, wherein the number of galvanostatic cycles is between 500 and 1500.

9. Method according to claim 8, wherein the number of galvanostatic cycles is between 700 and 1000.

10. Method according to any one of the preceding claims, wherein the magnetic field is constant.

11. Method according to any one of the preceding claims 1-9, wherein the magnetic field is variable.

12. Nanocomposite material obtained through the process described in any one of claims 1 to 11 above.

13. Electrodes for batteries or supercapacitors comprising the material of claim 12.

14. Use of the nanocomposite material of claim 12 in electrodes for batteries.

15. Use of the nanocomposite material of claim 12 in electrodes for supercapacitors.

## Patentansprüche

1. Verfahren zum Erhalten eines Nanokompositmaterials, umfassend die folgenden Schritte:
a) Bereitstellen eines Präkursor-Nanokompositmaterials, das eine graphitierte Kohlenstoffmatrix mit FeNi₃-Nanopartikeln umfasst, und
b) Aussetzen des Materials einer Anzahl zwischen 100 und 10.000 galvanostatischen Lade-/Entladezyklen bei einer Stromdichte zwischen 30 Ag⁻¹ und 1 Ag⁻¹ entweder zum Laden oder Entladen, während ein Magnetfeld mit einer Intensität zwischen 5 mT und 600 mT (50 G und 6.000 G) angelegt wird.

2. Verfahren nach Anspruch 1, wobei die galvanostatischen Zyklen bei einer Stromdichte von 10 Ag⁻¹ zum Laden und 1 Ag⁻¹ zum Entladen ausgeführt werden.

3. Verfahren nach Anspruch 1 oder 2, wobei die galvanostatischen Zyklen in einem Potentialfenster zwischen +0,4 V und -0,3 V vs. Ag/AgCl_{KCL 3M} ausgeführt werden.

4. Verfahren nach einem der vorhergehenden Ansprüche, wobei das Magnetfeld eine Intensität zwischen 100 mT und 600 mT (1.000 G und 6.000 G) aufweist.

5. Verfahren nach Anspruch 4, wobei das Magnetfeld eine Intensität zwischen 200 mT und 600 mT (2.000 G und 6.000 G) aufweist.

6. Verfahren nach Anspruch 5, wobei das Magnetfeld eine Intensität von 400 mT (4.000 G) aufweist.

7. Verfahren nach einem der vorhergehenden Ansprüche 1 bis 6, wobei die Anzahl der galvanostatischen Zyklen zwischen 100 und 5.000 liegt.

8. Verfahren nach Anspruch 7, wobei die Anzahl der galvanostatischen Zyklen zwischen 500 und 1.500 liegt.

9. Verfahren nach Anspruch 8, wobei die Anzahl der galvanostatischen Zyklen zwischen 700 und 1.000 liegt.

10. Verfahren nach einem der vorhergehenden Ansprüche, wobei das Magnetfeld konstant ist.

11. Verfahren nach einem der vorhergehenden Ansprüche 1 bis 9, wobei das Magnetfeld variabel ist.

12. Nanokompositmaterial, das durch das Verfahren erhalten wurde, das in einem der vorhergehenden Ansprüche 1 bis 11 beschrieben wurde.

13. Elektroden für Batterien oder Superkondensatoren, umfassend das Material nach Anspruch 12.

14. Verwendung des Nanokompositmaterials nach Anspruch 12 in Elektroden für Batterien.

15. Verwendung des Nanokompositmaterials nach Anspruch 12 in Elektroden für Superkondensatoren.

## Revendications

1. Procédé d'obtention d'un matériau nanocomposite comprenant les étapes suivantes:
a) fournir un matériau nanocomposite précurseur comprenant une matrice de carbone graphitée avec des nanoparticules de FeNi₃, et
b) soumettre ledit matériau à un nombre compris entre 100 et 10000 cycles de charge / décharge galvanostatique à une densité de courant comprise entre 30 Ag⁻¹ et 1 Ag⁻¹ soit pour la charge soit pour la décharge, tandis qu'un champ magnétique d'une intensité comprise entre 5 mT and 600 mT (50 G et 6000 G) est appliqué.

2. Procédé selon la revendication 1, dans lequel les cycles galvanostatiques sont effectués à une densité de courant de 10 Ag⁻¹ pour la charge et 1 Ag⁻¹ pour la décharge.

3. Procédé selon la revendication 1 ou 2, dans lequel les cycles galvanostatiques sont réalisés dans une fenêtre de potentiel comprise entre +0,4 V et -0,3 V par rapport à Ag / AgCl_{KCl 3M}.

4. Procédé selon l'une quelconque des revendications précédentes, dans lequel le champ magnétique a une intensité comprise entre 1000 G et 6000 G.

5. Procédé selon la revendication 4, dans lequel le champ magnétique a une intensité comprise entre 100 mT et 600 mT (2000 G et 6000 G).

6. Procédé selon la revendication 5, dans lequel le champ magnétique a une intensité de 40 mT (4000 G).

7. Procédé selon l'une quelconque des revendications 1 à 6 ci-dessus, dans lequel le nombre de cycles galvanostatiques est compris entre 100 et 5000.

8. Procédé selon la revendication 7, dans lequel le nombre de cycles galvanostatiques est compris entre 500 et 1500.

9. Procédé selon la revendication 8, dans lequel le nombre de cycles galvanostatiques est compris entre 700 et 1000.

10. Procédé selon l'une quelconque des revendications précédentes, dans lequel le champ magnétique est constant.

11. Procédé selon l'une quelconque des revendications 1 à 9 précédentes, dans lequel le champ magnétique est variable.

12. Matériau nanocomposite obtenu par le procédé décrit dans l'une quelconque des revendications 1 à 11 ci-dessus.

13. Electrodes pour batteries ou supercondensateurs comprenant le matériau selon la revendication 12.

14. Utilisation du matériau nanocomposite selon la revendication 12 dans des électrodes pour batteries.

15. Utilisation du matériau nanocomposite selon la revendication 12 dans des électrodes pour supercondensateurs.
